# EUROPÄISCHE PATENTSCHRIFT

(11) **EP 3 392 216 B1**
(45) Veröffentlichungstag und Bekanntmachung des Hinweises auf die Patenterteilung: **30.06.2021**
(21) Anmeldenummer: 18173608.3
(22) Anmeldetag: 29.08.2016
(51) Int. Cl.: C03C 3/087, C03C 4/20, C03C 21/00, C03C 3/112

(54) **CHEMISCH BESTÄNDIGES GLAS UND DESSEN VERWENDUNG**
CHEMICALLY RESISTANT GLASS AND ITS USE
VERRE RESISTANT AUX PRODUITS CHIMIQUES ET SON UTILISATION

(30) Priorität: 23.09.2015 DE 102015116097
(43) Veröffentlichungstag der Anmeldung: 24.10.2018
(62) Teilanmeldung aus: 16186177.8
(73) Patentinhaber: Schott AG, 55122 Mainz (DE)
(72) Erfinder: Schwall, Michael, 55116 Mainz (DE); Pawlowski, Edgar, 55271 Stadecken-Elsheim (DE)
(74) Vertreter: Witte, Weller & Partner Patentanwälte mbB

(56) Entgegenhaltungen:
- EP-A1- 0 987 731
- EP-A1- 2 338 847
- EP-A1- 2 876 092
- EP-B1- 2 539 289
- WO-A1-2014/196655
- WO-A2-2013/063002
- US-A1- 2013 233 386

## Beschreibung

Die Erfindung betrifft ein Glas, das insbesondere zur Verwendung als Primärverpackungsmaterial in der Pharmaindustrie geeignet ist. An solche Gläser werden insbesondere hohe Anforderungen bezüglich der chemischen Beständigkeit gestellt. Ferner sollen die Gläser delaminationsfrei sein, d.h. es dürfen sich im Gebrauch keine Schichten aus dem Glas ablösen, die das verpackte Pharmamittel verunreinigen würden.

Neben der sehr guten chemischen Beständigkeit werden an Gläser, die als Primärverpackungsmaterial in der Pharmaindustrie geeignet sind, allerdings noch weitere Anforderungen gestellt.

So muss das Glas in herkömmlichen Schmelzaggregaten produzierbar sein, d.h. die Viskosität der Schmelze darf nicht zu hoch liegen - möglichst sollte die Verarbeitungstemperatur (Temperatur bei der die Viskosität 104 dPas beträgt, auch als VA oder T4 bezeichnet) den Maximalwert von 1350°C nicht überschreiten. T4 sollte für eine energiesparende Produktion möglichst niedrig liegen.

Ferner sollen die Gläser bevorzugt boroxidfrei sein. Die EU (Europäische Union) stuft Borsäure, Dibortrioxid, Dinatriumtetraborat-Anhydrit, Dinatriumtetraborat-Decahydrat und Dinatriumtetraborat-Pentahydrat neuerdings als reproduktionstoxisch ein. Dies hat zur Folge, dass bei der Herstellung unter Verwendung von solchen Rohstoffen bestimmte Randbedingungen einzuhalten bzw. bestimmte Vorsichtsmaßnahmen zu treffen sind.

Wegen der relativ hohen Kosten borhaltiger Rohstoffe, der absehbaren Verknappung geeigneter Qualitäten sowie der aktuellen Diskussion zur Neueinstufungen der Toxizität von Borverbindungen sind borfreie Gläser von Interesse.

Schließlich soll das Glas vorteilhaft chemisch vorspannbar sein. Beim chemischen Vorspannen wird ein gewisser Anteil der Natrium-Ionen durch Kalium-Ionen ersetzt, was wegen der größeren Kalium-Ionen zu einer Druckspannung im Glas führt. Um ein wirkungsvolles chemisches Vorspannen zu ermöglichen, müssen verschiedene Randbedingungen erfüllt sein.

Aus der US 8 753 994 B2 und der DE 20 2012 013 126 U1 sind Aluminosilikatgläser bekannt, die eine verbesserte chemische Beständigkeit aufweisen sollen. Der Gehalt an SiO₂ liegt zwischen 70 und 78 Mol-%, der Gehalt an Al₂O₃ beträgt 4 bis 9 Mol-%, der Gehalt an MgO beträgt 0 bis 7 Mol-%, und der Gehalt an CaO beträgt 0 bis 6 Mol-%. Die hydrolytische Beständigkeit dieser Gläser ist in der Praxis jedoch nicht ausreichend.

Die RO 83460 A offenbart ein Aluminosilikatglas mit einem Gehalt an SiO2 von 70 bis 73 Gew.-%, einem Gehalt an Al₂O₃ von 3 bis 6 Gew.-%, einem Gehalt an CaO von 3 bis 9 Gew.-%, teilweisen Zusätzen von BaO bis zu 2 Gew.-% und einem Gehalt an Na2O von 11 bis 14 Gew.-%, teilweise mit geringen Zusätzen von K₂O.

Die chemische Beständigkeit dieses Glases ist nicht ausreichend.

Aus der EP 2 876 092 A1 ist ein Pharmaglas mit 50 bis 80 Mol-% SiO₂, 5-30 Mol-% Al₂O₃, 0-2 Mol-% Li₂O und 5-25 Mol-% Na₂O bekannt. Zur chemischen Beständigkeit finden sich in dieser Schrift keine Angaben. Jedoch ist davon auszugehen, dass diese relativ schlecht ist.

Aus der WO 2014/196655 A1 ist ein weiteres Pharmaglas bekannt mit 69 bis 81 Mol-% SiO₂, 4 bis 12 Mol-% Al₂O₃, 0 bis 5 Mol-% B₂O₃, einem Summenalkaligehalt von 5 bis 20 Mol-%, 0,1 bis 12 Mol-% Li₂O und einem Summengehalt an MgO+CaO+SrO+BaO von 0 bis 10 Mol-%.

Diese Gläser weisen zwar eine sehr niedrige Verarbeitungstemperatur auf, sind aber als nicht ausreichend chemisch beständig anzusehen.

Aus der DE 10 2013 114 225 A1 ist ein chemisch vorspannbares Glas bekannt mit 56-70 Mol-% SiO₂, 10,5 bis 16 Mol-% Al₂O₃, 10-15 Mol-% Na₂O und optionalen Zusätzen von B₂O₃, P₂O₃, K₂O, MgO, ZnO, TiO₂, SnO₂, sowie 0,001-5 Mol-% F. Auf Grund seiner chemischen Zusammensetzung weist dieses Glas voraussichtlich keine ausreichende chemische Beständigkeit auf.

Aus der DE 10 2009 051 852 B4 ist schließlich ein boroxidfreies Neutralglas bekannt, mit 65-72 Gew.-% SiO₂, 11-17 Gew.-% Al₂O₃, 2-8 Gew.-% Na₂O, 3-8 Gew.-% MgO, 4-12 Gew.-% CaO und 0-10 Gew.-% ZnO, wobei das Gewichtsverhältnis CaO/MgO 1,4 bis 1,8 beträgt und eine gute chemische Beständigkeit gegeben ist.

Jedoch sind diese Gläser nicht auf eine gute chemische Vorspannbarkeit optimiert. Außerdem erscheint die Verarbeitungstemperatur zu hoch. Zusätzlich ist das Kristallisationsverhalten auf Grund des niedrigen Anteils an Netzwerkwandlern problematisch.

Aus der WO 2013/063002 A2 ist ein Aluminosilikatglas mit verbesserter chemischer Beständigkeit bekannt, das 72,3 Mol-% SiO₂, 7,4 Mol-% Al₂O₃, 7,7 Mol-% Na₂O, 6,8 Mol-% MgO, 4,3 Mol-% CaO, 0 Mol-% ZrO₂, 0 Mol-% TiO₂, 0,5 Mol-% K₂O, 0 Mol-% Li₂O, 0,5 Mol-% BaO und 0,3 Mol-% SnO₂ aufweist, wobei das Gewichtsverhältnis Al₂O₃/ Na₂O 0,96 beträgt, und das Gewichtsverhältnis Al₂O₃/CaO 1,7 beträgt. Die Summe von SiO₂ und Al₂O₃ ist 79,1, und die Summe von SiO₂, Al₂O₃ und ZrO₂ ist 79,7. Das Glas erfüllt ferner die hydrolytische Beständigkeit nach DIN ISO 720 HGB1.

Aus der EP 2 338 847 A1 ist ferner ein Glas bekannt, das 74,3 Mol-% SiO₂, 7,4 Mol-% Al₂O₃, 5,1 Mol-% Na₂O, 5,0 Mol-% MgO, 5,1 Mol-% CaO, 3,1 Mol-% ZnO aufweist, wobei das Gewichtsverhältnis Al₂O₃/ Na₂O 1,45 beträgt, und wobei das Gewichtsverhältnis Al₂O₃/CaO 1,45 beträgt. Dabei sind bis auf unvermeidbare Verunreinigungen kein Li₂O, B₂O₃, SrO, BaO und PbO enthalten. Die Summe von SiO₂ und Al₂O₃ ist 81,7, und die Summe von SiO₂, Al₂O₃ und ZrO₂ ist 81,7.Das Glas erfüllt ferner die hydrolytische Beständigkeit nach DIN ISO 719 HGB1.

Aus der EP 0 987 731 A1 ist ein weiteres Glas mit den folgenden Bestandteilen bekannt: 67,0 Mol-% SiO₂, 5,6 Mol-% Al₂O₃, 4,9 Mol-% Na₂O, 3,5 Mol-% MgO, 3,7 Mol-% BaO, 5,1 Mol-% K₂O, 4,4 Mol-% SrO, 2,4 Mol-% ZrO₂, 0,4 Mol-% TiO₂, 0 Mol-% ZnO, 0 Mol-% B₂O₃, 2,5 Mol-% CaO, aufweist, wobei das Gewichtsverhältnis Al₂O₃/ Na₂O 1,1 beträgt, und wobei das Gewichtsverhältnis Al₂O₃/CaO 2,2 beträgt. Die Summe von SiO₂ und Al₂O₃ ist 72,5, und die Summe von SiO₂, Al₂O₃ und ZrO₂ ist 74,9.

Aus der US 2013/233386 A1 ist ein weiteres Glas mit den folgenden Bestandteilen bekannt: 64,0 Mol-% SiO₂, 12 Mol-% Al₂O₃, 10,0 Mol-% Na₂O, 7,0 Mol-% MgO, 0 Mol-% BaO, 2,0 Mol-% K₂O, 0,5 Mol-% SrO, 0,5 Mol-% ZrO₂, 0 Mol-% TiO₂, 0 Mol-% B₂O₃, 4,0 Mol-% CaO, 0 Mol-% Li₂O. Dabei beträgt das Gewichtsverhältnis Al₂O₃/ Na₂O 1,2 und das Gewichtsverhältnis Al₂O₃/CaO beträgt 3. Die Summe von SiO₂ und Al₂O₃ ist 76, und die Summe von SiO₂, Al₂O₃ und ZrO₂ ist 76,5.

Auch wenn diese Gläser teilweise eine gute chemische Beständigkeit aufweisen, so erfüllen sie doch nicht sämtliche Anforderungen, die an derartige Gläser gestellt werden.

Die Aufgabe der Erfindung besteht darin, ein boroxidfreies Glas zu offenbaren, das eine ausreichende chemische Beständigkeit aufweist, so dass es möglichst als Primärverpackungsmaterial in der Pharmaindustrie geeignet ist, und das in herkömmlichen Schmelzanlagen bei möglichst nicht zu hohen Schmelztemperaturen produzierbar ist. Ferner sollte das Glas möglichst gut chemisch vorspannbar sein.

Die Aufgabe der Erfindung wird gelöst durch ein Glasgemäß Anspruch 1.

Die Aufgabe der Erfindung wird auf diese Weise vollkommen gelöst.

Soweit im Rahmen dieser Anmeldung Zusammensetzungen in der Form angegeben sind, dass darin bestimmte Bestandteile enthalten sind oder dass sie bestimmte Bestandteile aufweisen, sind diese immer so zu verstehen, dass beliebige weitere Bestandteile darin enthalten sein können (offene Zusammensetzung).

In einer weiteren Ausführungsform der Erfindung sind die angegebenen Zusammensetzungen jedoch auch so zu verstehen, dass nur die jeweils angegebenen Bestandteile enthalten sind (geschlossene Zusammensetzung), abgesehen von unvermeidbaren Verunreinigungen, die durch die Natur der Glasherstellung bedingt sind. Je nach der Reinheit der verwendeten Rohstoffe sind solche unvermeidbaren Verunreinigungen auf maximal 1 Mol-%, vorzugsweise auf 0,5 Mol-%, weiter vorzugsweise auf 0,1 Mol-%, oder sogar auf 0,05 Mol-% beschränkt.

Soweit im Rahmen dieser Anmeldung Zusammensetzungen in der Form angegeben sind, dass sie aus bestimmten Bestandteilen bestehen, sind diese Zusammensetzungen immer so zu verstehen, dass darin nur die angegebenen Bestandteile enthalten sind (geschlossene Zusammensetzung), allerdings mit der Maßgabe, dass unvermeidbare Verunreinigungen, die durch die Natur der Glasherstellung bedingt sind, enthalten sein können. Je nach der Reinheit der verwendeten Rohstoffe, sind solche unvermeidbaren Verunreinigungen auf maximal 1 Mol-%, vorzugsweise auf 0,5 Mol-%, weiter vorzugsweise auf 0,1 Mol-%, oder sogar auf 0,05 Mol-% beschränkt.

Soweit im Rahmen dieser Anmeldung in Ausführungsbeispielen durch Aufzählung bestimmter Bestandteile angegeben sind, sind diese Angaben als geschlossene Zusammensetzungen zu verstehen, allerdings mit der Maßgabe, dass unvermeidbare Verunreinigungen, die durch die Natur der Glasherstellung bedingt sind, enthalten sein können. Je nach der Reinheit der verwendeten Rohstoffe, sind solche unvermeidbaren Verunreinigungen auf maximal 1 Mol-%, vorzugsweise auf 0,5 Mol-%, weiter vorzugsweise auf 0,1 Mol-%, oder sogar auf 0,05 Mol-% beschränkt.

Ein Mindestgehalt von 64 Mol-% an SiO₂ ist notwendig für eine gute chemische Beständigkeit. Ab einem SiO₂-Gehalt von über 77 Mol-% steigt die Verarbeitungstemperatur zu stark an, so dass eine Herstellung in Standard-Schmelzaggregaten nicht mehr möglich ist.

Der minimale Gehalt an Al₂O₃ beträgt 5 Mol-%, bevorzugt mindestens 9 Mol-%, weiter bevorzugt mindestens 10,3 Mol-%. Der minimale Gehalt ist so gewählt, dass die Glasstruktur unterstützt, also eine bessere Vernetzung und eine hervorragende hydrolytische Beständigkeit erreicht wird. Ferner verbessern Zusätze von Al₂O₃ insbesondere die chemische Beständigkeit im pH-Bereich von 6-14. Insbesondere wird die Schwäche der chemischen Beständigkeit von rein silikatischen Gläsern im pH-Bereich von 8-14 stark verbessert. Der maximale Gehalt an Al₂O₃ beträgt 14 Mol-%, bevorzugt 12,5 Mol-%. Der maximale Summengehalt an SiO₂ + Al₂O₃, sowie vorzugsweise auch ZrO₂, sollte < 82 Mol-% sein, um einen Anstieg der Verarbeitungstemperatur über 1350 °C und damit einen Anstieg der Kristallisationsneigung und der Produktionskosten zu vermeiden.

Da das erfindungsgemäße Glas bevorzugt bis auf unvermeidbare Verunreinigungen frei von Boroxid ist, wird die Gefahr von Delaminationen vermieden.

Um ein gute chemische Vorspannbarkeit (lonenaustausch unterhalb der Transformationstemperatur) zu erhalten, ist es vorteilhaft, wenn nach dem Ionenaustausch (Kalium-Ionen gegen Natrium-Ionen) das erreichte Mischalkaliverhältnis der beiden Alkalioxide in einem ausgewogenen Verhältnis zueinander liegt. Vorzugsweise sollte das Mol-Verhältnis von Na₂O zu K₂O in einem festen Verhältnis im Bereich von 3:1 bis 5:1 liegen.

Dies unterstützt eine Erhöhung der hydrolytischen Beständigkeit des Glases bis auf mindestens HGB1 (nach ISO 719). Zusätzlich bietet ein chemisch vorgespanntes Glas den Vorteil einer höheren Bruch- und Kratzfestigkeit. Das Glas kann ohne, aber auch mit lonenaustausch für pharmazeutische Behälter genutzt werden.

Durch die Einstellung der Verhältnisse Al₂O₃/Na₂O ≥ 1 und Al₂O₃/CaO ≥ 1,5 wird eine gute chemische Beständigkeit insbesondere im Hinblick auf die Beständigkeit im Autoklav-Test nach ISO 720 unterstützt. Die chemische Vorspannbarkeit wird durch den Natriumgehalt im angegebenen Bereich von 4 bis 12 Mol-% vorzugsweise in Verbindung mit einer Freiheit von Kaliumoxid und Lithiumoxid unterstützt. Insbesondere ist das Verhältnis Al₂O₃/Na₂O derart gewählt, dass die hydrolytische Beständigkeit nach ISO720 unter 62 µg/g liegt, was durch die Bildung des [AlO⁴⁻]-Na⁺-Strukturelementes begünstigt wird.

Ferner ist das Verhältnis Al₂O₃/CaO so gewählt, dass jeweils annähernd zwei [AlO⁴-]-Gruppen pro Ca²⁺-Ion vorhanden ist, wodurch die Mobilität der Ca²⁺-Spezies verringert wird und eine exzellente hydrolytische Beständigkeit ermöglicht wird.

Mit den erfindungsgemäßen Gläsern wird nach einem chemischen Vorspannen eine minimale Druckspannung (CS) von mindestens 500 MPa erreicht. Sogar Werte von mindestens 700 MPa, mindestens 800 MPa oder mindestens 900 MPa sind erreichbar.

Der Gehalt an Na₂O beträgt mindestens 4 Mol-%, um eine niedrige Viskosität beim Erschmelzen zu gewährleisten und um andererseits bei der Herstellung von Pharmagläsern und den üblichen Nachverarbeitungsschritten (Waschprozesse, chemisches Vorspannen) ein niedriges Auslaugverhalten zu gewährleisten. Ein Gehalt von 12 Mol-% Na₂O sollte nicht überschritten werden, da sonst die hydrolytische Beständigkeit absinkt.

Der Gehalt an K₂O beträgt 0 bis 3 Mol-%. Bevorzugt ist mehr als 0,5 Mol-%, besonders bevorzugt mehr als 0,8 Mol-% enthalten. Besonders bevorzugt ist der Gehalt an K₂O > 0,5 Mol-% bis < 2,5 Mol-%. Geringe Zugaben von K₂O verringern die Kristallisationsneigung, was insbesondere beim Rohrziehen vorteilhaft ist.

Die erfindungsgemäßen Gläser können ferner 0 bis 4,5 Mol-% TiO₂, bevorzugt mindestens 0,1 Mol-%, weiter bevorzugt mindestens 0,5 Mol-% TiO₂ enthalten. Weiter bevorzugt beträgt der Gehalt an TiO₂ 0,1 Mol-% bis 2,0 Mol-%, besonders bevorzugt 0,5 bis 1,5 Mol-%.

Geringe Zusätze von Titanoxid TiO₂ können die hydrolytische Beständigkeit der Gläser verbessern und die Erreichung einer für die Verarbeitung geeigneten Viskosität unterstützen. Je nach Anwendungsfall wird auf den Einsatz von Titanoxid ganz verzichtet.

Die erfindungsgemäßen Gläser können ferner 0,0 bis 2 Mol-% an Zirkonoxid enthalten.

Ein Zusatz von Zirkonoxid verbessert die hydrolytische Beständigkeit der Gläser. Hierdurch wird die Beständigkeit bei leicht erhöhten pH-Werten (8-9) stabilisiert, ohne dass die Verarbeitungstemperatur über 1350 °C ansteigt.

ZrO₂ kann ganz oder teilweise durch TiO₂ ersetzt werden. Durch den Zusatz von TiO₂ kann die Glastruktur stabilisiert werden, indem sich Stuktureinheiten von [TiO₃]²⁻ und Ca²⁺ bilden, welche die Mobilität der Ca²⁺ -Ionen herabsetzen und damit auch die Auslaugbarkeit. Eine Grenze von 4,5 Mol-% sollte nicht überschritten werden, damit die Verarbeitungstemperatur nicht über 1350 °C ansteigt und die Entglasungsneigung nicht erhöht wird.

Eine besonders gute chemische Vorspannbarkeit ergibt sich, wenn der Summengehalt ZrO₂ + TiO₂ mindestens 0,1, vorzugsweise mindestens 0,5 Mol-%, besonders bevorzugt, mindestens 1 Mol-% beträgt.

Der Summengehalt ZrO₂ + TiO₂ sollte jedoch 4,5 Mol-% nicht übersteigen, da sonst die Kristallisationsneigung und die Verarbeitungstemperatur zu stark ansteigen.

Die erfindungsgemäßen Gläser sind vorzugsweise bis auf unvermeidbare Verunreinigungen frei von Zinkoxid, da dies für Pharmaanwendungen nicht erwünscht ist.

SrO kann bis zu 3,5 Mol-% zusätzlich in das Glas eingebracht werden, um die Verarbeitungstemperatur durch Unordnung möglichst niedrig zu halten. Ferner erzeugt ein geringer Zusatz von SrO ein verbessertes Auslaugverhalten durch eine verringerte Mobilität.

Auf den Einsatz von Bleioxid PbO wird vorzugsweise aus toxikologischen Gründen verzichtet.

Auch wenn im Labormaßstab ohne Zusatz von Läutermitteln blasen- und schlierenfreie Gläser erzielt werden, können die erfindungsgemäßen Gläser 0,01 bis 2 Mol-%, vorzugsweise 0,1 bis 1,5 Mol-% an Läutermitteln für die großtechnische Produktion enthalten.

Durch den Zusatz von Fluorid wird die Viskosität der Schmelze erniedrigt, was die Läuterung beschleunigt. Aus Umweltschutzgründen sollte möglichst auf den Zusatz von As₂O₃ oder Sb₂O₃ verzichtet werden.

Durch die Zugabe von Chloriden oder Fluoriden als Läuterungsmittel wird die Säurebeständigkeit des Glases tendenziell verschlechtert. Außerdem kann eine Zugabe von Chloriden dazu führen, dass bei jeder Erwärmung Chlorid verdampft und anschließend auf den Glasprodukten kondensiert. Eine Zugabe von Fluoriden führt zwar zur Absenkung der Verarbeitungstemperatur T4, jedoch wird hierdurch die chemische Beständigkeit leicht verschlechtert. Auch können sich durch Zusatz von Chlorid Verdampfungs- bzw. Kondensationserscheinungen ergeben. Schließlich kann die Wannenbeständigkeit durch Fluoridzusätze beeinträchtigt werden.

Aus diesem Grunde wird der Zusatz von für Chlorid und Fluorid als Läutermittel auf maximal 1,5 Mol-% Chlorid bzw. Fluorid begrenzt.

Die erfindungsgemäßen Gläser eignen sich insbesondere als Primärverpackungsmaterial in der Pharmaindustrie, insbesondere als Flasche, Spritze, Karpule oder Ampulle. Dabei kann das Glas optional chemisch vorgespannt werden.

Ferner sind die erfindungsgemäßen Gläser als Dünn- oder Dünnstglas geeignet. Erfindungsgemäße Gläser werden auch als Sheet oder sogen. Wafer als dünne bzw. ultradünne Komponenten für anspruchsvolle Anwendungen in Optik, Optoelektronik und Elektronikbereichen eingesetzt. Beispielsweise seien erwähnt Displaygläser und Touch-Screen-Gläser, Kamera-Abbildungsgläser, Gläser für die Halbleiterindustrie, oder für die Energiespeicherung, wie in Dünnfilmbatterien. Auch Biotech-Anwendungen nutzen flache erfindungsgemäße Gläser.

Für alle genannten Anwendungen werden Gläser im Rahmen der Prozessierung bzw. Anwendung flüssigen Medien wie Wasser, Basen oder Laugen ausgesetzt. Entsprechend müssen diese Gläser chemisch inert sein.

Diese betrifft insbesondere auch Gläser die einer chemischen Vorspannung unterworfen werden.

Dünn- bzw. Dünnstglas kann mit einer kontrollierten Dicke zwischen 10 und 500 Mikrometer hergestellt werden.

Dünn- bzw. Dünnstglas kann durch Down-Draw-Verfahren, durch Overflow-Fusion-Verfahren, durch spezielle Floating-Verfahren, durch Nachziehverfahren, durch Polieren von Glas größerer Dicke oder durch Ätzen von Glas größerer Dicke hergestellt werden.

Das Ausgangsglas kann in der Form von Folien oder Rollen bereitgestellt werden. Das Ausgangsglas hat vorzugsweise eine glatte, feuerpolierte Oberfläche mit einer Oberflächenrauhigkeit Ra von weniger als 5 Nanometer. Die direkte Heißformung etwa mittels Down-Draw oder Overflow-Fusion sind die bevorzugten Verfahren für die Massenproduktion. Damit können feuerpolierte Oberflächen mit einer Oberflächenrauhigkeit Ra von weniger als 5 Nanometer, vorzugsweise weniger als 2 Nanometer, bis zu weniger als 1 Nanometer hergestellt werden.

Dünnstglas ist ideal zur Verwendung bei Roll-to-Roll-Verfahren. Durch die geringe Dicke wird die Glasflexibilität sichergestellt.

Dünnstglas kann auch durch Float-Verfahren kostengünstig mit hochglatter Oberfläche hergestellt werden. Allerdings werden beim Float-Prozess in Folge des Schwimmens auf der Zinn-Seite zwei leicht unterschiedliche Oberflächen hergestellt. Die leichten Unterschiede zwischen den beiden Seiten können bei einem späteren chemischen Vorspannen zu Wölbungserscheinungen führen und das Bedrucken und Beschichten beeinflussen, da die beiden Seiten unterschiedliche Oberflächenenergien aufweisen.

Darüber hinaus gibt es noch eine Reihe anderer vorteilhafter Anwendungen. Hierzu gehören Anwendungen als:
- Geräteglas für Laboranwendungen und für den Chemieanlagenbau,
- Substrat, Superstrat oder Abdeckungen, insbesondere für elektrotechnische Anwendungen, für TFT-, PWP-, OLED-Bildschirme, sowie für die Fotovoltaik,
- als Rohrglas, insbesondere für Lampen, Halogenlampen oder Leuchtstoffrohre oder für solarthermische Anwendungen,
- als Reflektorglas, insbesondere für Lampen, als Architekturglas,
- als temperaturwechselbeständige Gläser, insbesondere für Backofenteile, Kühlschrankteile oder Herdteile.

### Beispiele

In Tab. 1a und 1b sind erfindungsgemäße Gläser nebst ihren wichtigsten Eigenschaften zusammengefasst. Dabei stellen die Beispiele 1 bis 5 und 8 leidiglich Vergelichsbeispiele dar, die nicht von der Erfindung umfasst sind.

Diese Gläser zeigen durchweg eine gute hydrolytische Beständigkeit und eine Verarbeitungstemperatur T4 unterhalb von 1350 °C. Eine gute chemische Vorspannbarkeit wird durch eine hohe Druckspannung (Compressive Stress, CS) nach dem Vorspannen dokumentiert, die mit einer günstigen Eindringtiefe (Depth of Length) im Bereich von 20 Mikrometer einhergeht.

Die Gläser wurden durch Schmelzen üblicher Rohstoffe in einem induktiv beheizten Pt/Rh-Tiegel (Pt20Rh) bei 1650°C erschmolzen. Die Schmelzdauer betrug drei bis vier Stunden. Anschließend wurde die Schmelze zur Homogenisierung eine Stunde bei 1600°C gerührt und danach zwei Stunden bei dieser Temperatur ohne Rühren stehen gelassen, um evtl. vorhandene Blasen zur Oberfläche aufsteigen zu lassen. Die Schmelze wurde mit einer definierten Kühlrate von 30 K/h abgekühlt.

Die Gläser wurden anschließend chemisch vorgespannt. Beim Prozess des chemischen Vorspannens, entsteht eine Oberflächendruckspannung (compressive stress: CS). Die sich ergebende Druckspannungszone (DoL) liegt beim chemischen Vorspannen typischerweise zwischen 10 und 50 µm. Die Tiefe ist abhängig vom verwendeten Glas und dem Prozess.

Erzeugt wird diese Spannung durch den Austausch von kleineren (Na+) durch großvolumige Ionen (K+) in der Oberflächenschicht. Meistens werden hierbei aufgrund geringerer Diffusionsenergien Alkaliionen ausgetauscht. So wurden die verwendeten Gläser in einem Kaliumsalzbad unterhalb der Glasverformungstemperatur (Tg) vorgespannt. Für das Kaliumsalzbad können alle gängigen Kaliumsalze verwendet werden, deren Anionen im angegebenen Temperaturbereich stabil sind. Vorzugsweise wird KNO3 verwendet. Das Salzbad (in der Regel mit 100% Kaliumsalz beginnend) wird dann erneuert, wenn durch den Austausch der Kaliumionen-Gehalt soweit abgesunken ist, dass die gewünschte Austauschtiefe nicht mehr erreicht wird. Das ist in der Regel bei < 95 Gew.-% Kaliumsalzen der Fall.

Die Glaskörper wurden in Salzbädern, vorzugsweise in Bädern, die aus 100 Gew.- % bis mindestens 95 Gew.-% Kaliumsalzen bestehen, bei Badtemperaturen zwischen 400°C und 550°C, bevorzugt zwischen 450°C und 500°C, besonders bevorzugt bei höchstens 500°C für 2 bis 10 h, besonders bevorzugt für mindestens 5 h belassen. Nach dem lonenaustausch im Salzbad werden die Behälter aus dem Bad gehoben und abgekühlt.

**Tab. 1a: Beispiele (Zusammensetzung in Mol-%)**

| Beispiele (Mol-%) | 1 | 2 | 3 | 4 | 5 | 6 | 7 | 8 |
|---|---|---|---|---|---|---|---|---|
| SiO₂ | 65,9 | 70,2 | 68,8 | 72,5 | 68,2 | 68.0 | 68,2 | 64,0 |
| B₂O₃ | 0,0 | 0,0 | 0,0 | 0,0 | 0,0 | 0,0 | 0,0 | 0,0 |
| Al₂O₃ | 11,7 | 10,4 | 11,3 | 9.1 | 11,8 | 12,0 | 11,8 | 12,0 |
| Na₂O | 6,1 | 9,0 | 10,0 | 8,5 | 10,5 | 12,0 | 10,5 | 4,0 |
| K₂O | 0,0 | 0,5 | 0,0 | 0,0 | 0,0 | 0,5 | 0,0 | 0,0 |
| MgO | 10.1 | 8,0 | 7,0 | 7,0 | 3,2 | 0.0 | 1,2 | 12.0 |
| CaO | 6,2 | 2.0 | 3,0 | 3,0 | 5,2 | 5,0 | 5,2 | 8,0 |
| ZrO₂ | 0.0 | 0,0 | 0.0 | 0.0 | 1,1 | 0,0 | 0,0 | 0,0 |
| TiO₂ | 0,0 | 0,0 | 0,0 | 0,0 | 0,0 | 1,5 | 3,1 | 0,0 |
| F | 0,0 | 0,0 | 0,0 | 0,0 | 0,0 | 1,0 | 0,0 | 0,0 |
| Al₂O₃ : Na₂O | 1,92 | 1.15 | 1,13 | 1,07 | 1,12 | 1,00 | 1,12 | 3,00 |
| Al₂O₃ : CaO | 1,9 | 5,2 | 3,8 | 3,0 | 2,3 | 2,4 | 2,3 | 1,5 |
| SiO₂+Al₂O₃ | 77,6 | 80,6 | 80,0 | 81,5 | 80,0 | 80,0 | 80,0 | 76,0 |
| CTE [10⁻⁶/K] | 5,36 | 6,27 | 6,44 | 5,88 | 6,68 | 7,62 | 6,89 | 4,93 |
| Tg [°C] | 702 | 688 | 675 | 682 | 692 | 642 | 685 | 728 |
| Dichte [g/cm³] | 2,50 | 2,43 | 2,45 | 2,41 | 2,49 | 2,46 | 2,47 | 2,54 |
| T4 [°C] | 1262 | 1336 | 1316 | 1344 | 1315 | 1300 | 1301 | 1238 |
| CS [MPa] | | 748 | 849 | 701 | 900 | 959 | 923 | |
| DoL [µm] | | 23 | 19 | 19 | 17 | 26 | 27 | |
| HGB DIN ISO 719 [µg/g] | 16,0 | | | | | | | |
| Wasserbeständigkeit DIN ISO 719 | HGB1 | | | | | | | |
| HGA DIN ISO 720 [µg/g] | | 49,1 | 49,9 | 47,0 | 46,6 | 61 | 50,8 | 47,0 |
| Wasserbeständigkeit DIN ISO 720 | | HGA1 | HGA1 | HGA1 | HGA1 | HGA1 | HGA1 | HGA1 |

**Tab. 1b: Beispiele (Zusammensetzung in Mol-%)**

| Beispiel | 9 | 10 | 11 | 12 | 13 | 14 | 15 |
|---|---|---|---|---|---|---|---|
| Mol-% | | | | | | | |
| SiO₂ | 69,3 | 69,0 | 68,7 | 69,2 | 68,0 | 68,3 | 68,3 |
| B₂O₃ | 0,0 | 0,0 | 0,0 | 0,0 | 0,0 | 0,0 | 0,0 |
| Al₂O₃ | 11,9 | 11,9 | 11,7 | 11,6 | 11,5 | 11,3 | 11,3 |
| Na₂O | 10,0 | 10,0 | 10,5 | 10,0 | 10,1 | 10,2 | 9,9 |
| K₂O | 1,0 | 1,0 | 1,0 | 1,0 | 1,0 | 1,0 | 1,2 |
| MgO | 0,0 | 0,0 | 0,0 | 0,0 | 0,5 | 0,0 | 0,5 |
| CaO | 6,4 | 6,8 | 6,8 | 6,7 | 7,3 | 7,4 | 7,2 |
| ZrO₂ | 0,0 | 0,0 | 0,0 | 0,0 | 0,0 | 0,0 | 0,0 |
| TiO₂ | 0,8 | 0,8 | 0,8 | 0,8 | 1,1 | 1,1 | 1,1 |
| F | 0,6 | 0,6 | 0,6 | 0,6 | 0,0 | 0,0 | 0,0 |
| Cl | 0,0 | 0,0 | 0,0 | 0,0 | 0,6 | 0,6 | 0,6 |
| Al₂O₃: Na₂O | 1,18 | 1,18 | 1,11 | 1,16 | 1,14 | 1,11 | 1,14 |
| Al₂O₃ : CaO | 1,9 | 1,8 | 1,7 | 1,7 | 1,6 | 1,5 | 1,6 |
| SiO₂+Al₂O₃ | 81,2 | 80,8 | 80,3 | 80,8 | 79,5 | 79,6 | 79,6 |
| CTE [10⁻⁶/K] | 6,98 | 7,06 | 7,22 | 7,04 | 7,1 | 7,21 | 7,06 |
| Tg [°C] | 694 | 685 | 685 | 689 | 677 | 679 | 675 |
| Dichte [g/cm³] | 2,4509 | 2,455 | 2,4568 | 2,4535 | 2,4668 | 2,4645 | 2,4632 |
| T4 [°C] | 1358 | 1351 | 1330 | 1348 | 1308 | 1306 | 1313 |
| CS [MPa] | | | 862 | 858 | 840 | 889 | 886 |
| DoL [µm] | | | 35 | 33 | 34 | 35 | 35 |
| H DIN ISO 719 [µg/g] | | | | | | | |
| Wasserbeständigkeit DIN ISO 719 | | | | | | | |
| HGA DIN ISO 720 [µg/g] | 47,0608 | 50,2159 | 51,8 | 48,5 | 54,7 | 55,7 | 55,5 |
| Wasserbeständigkeit DIN ISO 720 | HGA1 | HGA1 | HGA1 | HGA1 | HGA1 | HGA1 | HGA1 |

Weitere nicht zur Erfindung gehörende Vergleichsbeispiele sind in Tab. 2 zusammengefasst.

**Tab. 2: Vergleichsbeispiele (Zusammensetzung in Mol-%)**

| Beispiele (Mol-%) | V1 | V2 | V3 | V4 | V5 | V6 | V7 | V8 |
|---|---|---|---|---|---|---|---|---|
| SiO₂ | 71,0 | 76,0 | 60,9 | 75,6 | 70,0 | 71,0 | 74,1 | 67,5 |
| B₂O₃ | 0,0 | 0,0 | 0,0 | 0,0 | 0,0 | 0,0 | 0,0 | 0,0 |
| Al₂O₃ | 11,0 | 7,0 | 16,5 | 6,0 | 6.0 | 5,0 | 10,5 | 8,7 |
| Na₂O | 10,0 | 10,0 | 12,2 | 11,2 | 8,0 | 4,0 | 2,0 | 4,0 |
| K₂O | 1,0 | 1,0 | 2,9 | 0,1 | 0,0 | 0,0 | 0,0 | 0.0 |
| MgO | 5,0 | 4,0 | 2,1 | 6,8 | 8,0 | 10,0 | 7,8 | 9,9 |
| CaO | 1,0 | 1,0 | 1,7 | 0,4 | 8,0 | 10,0 | 5,6 | 9,9 |
| ZrO₂ | 1,0 | 1,0 | 3,7 | 0,0 | 0,0 | 0,0 | 0,0 | 0,0 |
| TiO₂ | 0,0 | 0,0 | 0,0 | 0,0 | 0,0 | 0,0 | 0,0 | 0,0 |
| F | 0.0 | 0,0 | 0,0 | 0,0 | 0,0 | 0,0 | 0,0 | 0,0 |
| Al₂O₃ : Na₂0 | 1,10 | 0,70 | 1,35 | 0,53 | 0,75 | 1,25 | 5,23 | 2,20 |
| Al₂O₃ : CaO | 11,0 | 7,0 | 9,7 | 17,1 | 0,8 | 0,5 | 1,9 | 0,9 |
| SiO₂+Al₂O₃ | 82,0 | 83,0 | 77,4 | 81,6 | 76,0 | 76,0 | 84,6 | 76,3 |
| CTE [10⁻⁶/K] | 6,7 | 6,7 | 8,39 | 6,82 | 6.52 | 5,53 | 3,56 | 4,97 |
| Tg [°C] | 714 | 649 | 648 | 618 | 653 | 703 | 767 | 712 |
| Dichte [g/cm³] | 2,44 | 2,41 | 2,46 | 2,39 | 2,48 | 2,48 | 2,43 | 2,51 |
| T4 [°C] | 1401 | 1373 | 1328 | 1305 | 1207 | 1237 | 1399 | 1250 |
| CS [MPa] | | 750 | 1110 | 702 | | | | |
| DoL [µm] | | 32 | 31 | 32 | | | | |
| HGB DIN ISO 719 [µg/g] | 16,7 | 18,3 | 28,0 | 44,0 | | | 9,0 | 26,0 |
| Wasserbeständigkeit DIN ISO 719 | HGB1 | HGB1 | HGB1 | HGB2 | | | HGB1 | HGB1 |
| HGA DIN ISO 720 [µg/g] | 20,1 | 50,4 | 71,9 | 83,6 | 78,0 | 92,0 | | 63,0 |
| Wasserbeständigkeit DIN ISO 720 | HGA1 | HGA1 | HGA2 | HGA2 | HGA2 | HGA2 | | HGA2 |

Bei den Vergleichsbeispielen V1 und V2 ist der Summengehalt an SiO₂ + Al₂O₃ zu hoch, so dass die Verarbeitungstemperatur über die gewünschte Grenze von 1350 °C hinaus ansteigt. Beim Vergleichsbeispiel V2 ist ferner das Verhältnis von Al₂O₃/Na₂O kleiner als 1.

Bei den Vergleichsbeispiel V7 ist gleichfalls der Summengehalt an SiO₂ + Al₂O₃ zu hoch, so dass die Verarbeitungstemperatur über die gewünschte Grenze von 1350 °C hinaus ansteigt.

Die Vergleichsbeispiele V5, V6 und V8 zeigen in Folge des zu niedrigen Verhältnisses von Al₂O₃/CaO, das kleiner als 1 ist, eine schlechte hydrolytische Beständigkeit.

Das Vergleichsbeispiel V4 weist ein zu niedriges Verhältnis von Al₂O₃/Na₂O auf, das kleiner als 1 ist. Auch dies führt zu einer schlechten hydrolytischen Beständigkeit.

Beim Vergleichsbeispiel V3 ist der Gehalt an Al₂O₃ und an ZrO₂ zu hoch, was zu einem Abfall der hydrolytischen Beständigkeit führt.

## Patentansprüche

1. Glas, das zumindest die folgenden Bestandteile (in Mol-% auf Oxidbasis) enthält:
| | |
|---|---|
| SiO₂ | 64 - 77 |
| Al₂O₃ | 9 - 14 |
| Na₂O | 4 - 12 |
| CaO | 1 - 12 |
| MgO | 0 - 14 |
| ZrO₂ | 0 - 2 |
| TiO₂ | 0,1 - 4,5 |
wobei das Verhältnis Al₂O₃/Na₂O ≥ 1,
wobei das Verhältnis Al₂O₃/CaO ≥ 1,5,
wobei der Summengehalt SiO₂ + Al₂O₃ < 82 Mol-%,
wobei bis auf unvermeidbare Verunreinigungen kein B₂O₃ enthalten ist, wobei, abgesehen von zufälligen Verunreinigungen kein Li₂O enthalten ist.

2. Glas nach Anspruch 1, das bis zu 3 Mol-% K₂O enthält, wobei vorzugsweise 0,5 Mol-% < K₂O < 2,5 Mol-%.

3. Glas nach einem der vorhergehenden Ansprüche, das bis zu 3,5 Mol-% SrO enthält, vorzugsweise mindestens 0,1, weiter bevorzugt mindestens 0,5 Mol-% SrO enthält.

4. Glas nach einem der vorhergehenden Ansprüche, bei dem der Summengehalt SiO₂ + Al₂O₃ + ZrO₂ < 82 Mol-%.

5. Glas nach einem der vorhergehenden Ansprüche, bei dem der Gehalt an Al₂O₃ mindestens 10,3 Mol-%, weiter bevorzugt höchstens 12,5 Mol-% beträgt.

6. Glas nach einem der vorhergehenden Ansprüche, das bis auf unvermeidbare Verunreinigungen kein ZnO enthält.

7. Glas nach einem der vorhergehenden Ansprüche, bei dem der Gehalt an Magnesiumoxid höchstens 4 Mol-% beträgt.

8. Glas nach einem der vorhergehenden Ansprüche, bei dem die hydrolytische Beständigkeit nach DIN ISO 719 HGB 1 und/oder die hydrolytische Beständigkeit nach DIN ISO 720 HGA1 ist.

9. Glas nach einem der vorhergehenden Ansprüche, das ferner mindestens 0,1, vorzugsweise mindestens 0,5 Mol-% ZrO₂ enthält, vorzugsweise höchstens 4,5 Mol-%.

10. Glas nach einem der vorhergehenden Ansprüche, das ferner mindestens 0,5 Mol-% TiO₂ enthält, vorzugsweise höchstens 4,5 Mol-%, weiter bevorzugt höchstens 2,0 Mol-%, besonders bevorzugt 0,5 Mol-% bis 1,5 Mol-% enthält.

11. Glas nach einem der vorhergehenden Ansprüche, bei dem der Summengehalt ZrO₂ + TiO₂ mindestens 0,1, vorzugsweise mindestens 0,5 Mol-%, besonders bevorzugt, mindestens 1 Mol-% beträgt, wobei der Summengehalt ZrO₂ + TiO₂ vorzugsweise höchstens 4,5 Mol-% beträgt.

12. Glas nach einem der vorhergehenden Ansprüche, das ferner 0,01 bis 2 Mol-%, vorzugsweise 0,1 bis 1,5 Mol-% an Läutermitteln enthält, wobei vorzugsweise mindestens ein Läutermittel enthalten ist, das aus der Gruppe ausgewählt ist, die durch As₂O₃, Sb₂O₃, SnO₂, CeO₂, Cl⁻, F⁻ und SO₄²⁻ gebildet ist, wobei der Gehalt an As₂O₃, an Sb₂O₃, Cl⁻, F⁻ und SO₄²⁻ vorzugsweise jeweils maximal 1,5 Mol-% beträgt, und wobei der Gehalt an SnO₂ und an CeO₂ vorzugsweise jeweils maximal 1 Mol-% beträgt, besonders bevorzugt jeweils < 0,01 Mol-%.

13. Glasbehälter aus einem mittels lonenaustausch chemisch vorgespannten Glas, bestehend aus einem Glas gemäß einem der vorhergehenden Ansprüche, der eine Druckspannungsschicht mit einer Tiefe der Schicht von mindestens 10 µm und eine Druckspannung von mindestens 500 MPa, vorzugsweise mindestens 700 MPa, weiter bevorzugt mindestens 800 MPa, besonders bevorzugt mindestens 900 MPa beträgt.

14. Verwendung eines Glases nach einem der vorhergehenden Ansprüche
- als Pharmaprimärpackmittel, insbesondere als Flasche, Spritze, Karpule oder Ampulle,
- chemisch vorspannbares Glas,
- Substrat, Superstrat oder Abdeckung, insbesondere für elektrotechnische Anwendungen, für TFT-, PDP-, OLED-Bildschirme, sowie für die Photovoltaik,
- Rohrglas, insbesondere für Lampen, Halogenlampen oder Leuchtstoffröhren oder für solarthermische Anwendungen,
- Reflektorglas, insbesondere für Lampen,
- Architekturglas,
- temperaturwechselbeständiges Glas, insbesondere für Backofenteile, Kühlschrankteile oder Herdteile,
- Dünn- oder Dünnstglas mit Dicken von 10 bis 500 Mikrometer und hochglatter oder feuerpolierter Oberfläche für zahlreiche Spezialanwendungen, einschließlich Roll-to-Roll-Prozesse..

## Claims

1. A glass comprising at least the following components (given in mol-% on oxide basis):
| | |
|---|---|
| SiO₂ | 64 - 77 |
| Al₂O₃ | 9 - 14 |
| Na₂O | 4 - 12 |
| CaO | 1 - 12 |
| MgO | 0 - 14 |
| ZrO₂ | 0 - 2 |
| TiO₂ | 0.1 - 4.5 |
wherein the ratio Al₂O₃/Na₂O ≥ 1;
wherein the ratio Al₂O₃/CaO ≥ 1.5;
wherein the total content SiO₂ + Al₂O₃ < 82 mol-%;
wherein there is present no B₂O₃, apart from unavoidable impurities;
wherein there is present no Li₂O, apart from unavoidable impurities.

2. The glass of claim 1, further comprising up to 3 mol-% K₂O, preferably 0.5 mol-% < K₂O < 2.5 mol-%.

3. The glass of any of the preceding claims, further comprising at least 0.1, preferably at least 0.5 mol-% SrO.

4. The glass of any of the preceding claims, wherein the total content SiO₂ + Al₂O₃ + ZrO₂ < 82 mol-%.

5. The glass of any of the preceding claims, wherein the Al₂O₃ content is at least 9 mol-%, preferably at least 10.3 mol-%, preferably a maximum of 12.5 mol-%.

6. The glass of any of the preceding claims, comprising no ZnO, apart from unavoidable impurities.

7. The glass of any of the preceding claims further comprising magnesium oxide, up to a maximum of 4 mol-%.

8. The glass of any of the preceding claims, wherein the hydrolytic resistance according to DIN ISO 719 is HGB 1 and/or the hydrolytic resistance according to DIN ISO 720 is HGA1.

9. The glass of any of the preceding claims further comprising at least 0.1, preferably at least 0.5 mol-% of ZrO₂, preferably a maximum of 4.5 mol-% of ZrO₂.

10. The glass of any of the preceding claims, further comprising at least 0.1, preferably at least 0.5 mol-% of TiO₂, preferably a maximum of 4.5 mol-%, more preferred a maximum of 2.0 mol-%, particularly preferred comprising 0.5 mol-% to 1.5 mol-% of TiO₂.

11. The glass of any of the preceding claims, wherein the total content ZrO₂ + TiO₂ is at least 0.1, preferably at least 0.5 mol-%, particularly preferred at least 1 mol-%, wherein the total content ZrO₂ + TiO₂ preferably is a maximum of 4.5 mol-%.

12. The glass of any of the preceding claims, further comprising 0.01 up to 2 wt.-%, preferably 0.1 up to 1.5 mol-%, of refining agents, wherein preferably a refining agent is present which is selected from the group consisting of As₂O₃, Sb₂O₃, SnO₂, CeO₂, Cl⁻, F⁻, and SO₄²⁻, wherein the content of As₂O₃, Sb₂O₃, Cl⁻, F⁻, and SO₄²⁻ is a maximum of 1.5 mol-% each, and wherein preferably the content of SnO₂ and of CeO₂ is a maximum of 1 mol-% each, preferably < 0.01 mol-% each.

13. A glass container made of a chemically by means of ion-exchange pre-stressed glass, made of a glass according to any of the preceding claims, comprising a compressive stress layer with a layer depth of at least 10 µm and a compressive stress of at least 500 MPa, preferably of at least 700 MPa, preferably of at least 800 MPa, particularly preferred at least 900 MPa.

14. Use of a glass according to any of the preceding claims as:
- pharmaceutical primary packaging medium, in particular as bottle, syringe, carpoule or ampoule;
- chemically pre-stressable glass;
- substrate, superstrate or cover, in particular for electrotechnical applications, for TFT, PDP, OLED displays, as well as for photovoltaic applications;
- tube glass, in particular for lamps, halogen lamps or fluorescent lamps or for solar thermal applications;
- reflector glass, in particular for lamps;
- architectural glass;
- temperature-cycling resistant glass, in particular for stove parts, refrigerator parts or hearth parts;
- thin or ultrathin glass with thicknesses from 10 to 500 micrometers and highly smooth or fire-polished surface for various special applications, including roll-to-roll processes.

## Revendications

1. Verre, qui contient au moins les ingrédients suivants (en % en moles sur une base d'oxyde) :
| | |
|---|---|
| SiO₂ | 64 à 77 |
| Al₂O₃ | 9 à 14 |
| Na₂O | 4 à 12 |
| CaO | 1 à 12 |
| MgO | 0 à 14 |
| ZrO₂ | 0 à 2 |
| TiO₂ | 0,1 à 4,5 |
le rapport Al₂O₃/Na₂O étant ≥ 1,
le rapport Al₂O₃/CaO étant ≥ 1,5,
la somme des teneurs SiO₂ + Al₂O₃ étant < 82 % en moles,
du B₂O₃ n'étant pas contenu excepté des impuretés inévitables,
du Li₂O n'étant pas contenu excepté des impuretés éventuelles.

2. Verre selon la revendication 1, qui contient jusqu'à 3 % en moles de K₂O, avec de préférence 0,5 % en moles < K₂O < 2,5 % en moles.

3. Verre selon l'une quelconque des revendications précédentes, qui contient jusqu'à 3,5 % en moles de SrO, de préférence au moins 0,1, plus préférablement au moins 0,5 % en moles de SrO.

4. Verre selon l'une quelconque des revendications précédentes, dans lequel la somme des teneurs SiO₂ + Al₂O₃ + ZrO₂ est < 82 % en moles.

5. Verre selon l'une quelconque des revendications précédentes, dans lequel la teneur en Al₂O₃ est d'au moins 10,3 % en moles, plus préférablement d'au plus 12,5 % en moles.

6. Verre selon l'une quelconque des revendications précédentes, qui ne contient pas de ZnO excepté des impuretés inévitables.

7. Verre selon l'une quelconque des revendications précédentes, dans lequel la teneur en oxyde de magnésium est d'au plus 4 % en moles.

8. Verre selon l'une quelconque des revendications précédentes, dans lequel la stabilité hydrolytique est selon la norme DIN ISO 719 HGB 1 et/ou la stabilité hydrolytique est selon la norme DIN ISO 720 HGA 1.

9. Verre selon l'une quelconque des revendications précédentes, qui contient en outre au moins 0,1, de préférence au moins 0,5 % en moles de ZrO₂, de préférence au plus 4,5 % en moles.

10. Verre selon l'une quelconque des revendications précédentes, qui contient en outre au moins 0,5 % en moles de TiO₂, de préférence au plus 4,5 % en moles, plus préférablement au plus 2,0 % en moles, particulièrement préférablement 0,5 % en moles à 1,5 % en moles.

11. Verre selon l'une quelconque des revendications précédentes, dans lequel la somme des teneurs ZrO₂ + TiO₂ est d'au moins 0,1, de préférence au moins de 0,5 % en moles, particulièrement préférablement au moins de 1 % en moles, la somme des teneurs ZrO₂ + TiO₂ étant de préférence d'au plus 4,5 % en moles.

12. Verre selon l'une quelconque des revendications précédentes, qui contient en outre 0,01 à 2 % en moles, de préférence 0,1 à 1,5 % en moles d'agents d'affinage, de préférence au moins un agent d'affinage étant contenu, qui est choisi dans le groupe formé par As₂O₃, Sb₂O₃, SnO₂, CeO₂, Cl⁻, F⁻ et SO₄²⁻, la teneur en As₂O₃, en Sb₂O₃, Cl⁻, F⁻ et SO₄²⁻ étant de préférence à chaque fois d'au maximum 1,5 % en moles, et la teneur en SnO₂ et en CeO₂ étant de préférence à chaque fois d'au maximum 1 % en moles, particulièrement préférablement à chaque fois < 0,01 % en moles.

13. Récipient de verre composé d'un verre trempé chimiquement au moyen d'un échange d'ions, composé d'un verre selon l'une quelconque des revendications précédentes, qui possède une couche de compression comportant une profondeur de la couche d'au moins 10 µm et une compression d'au moins 500 MPa, de préférence d'au moins 700 MPa, plus préférablement d'au moins 800 MPa, particulièrement préférablement d'au moins 900 MPa.

14. Utilisation d'un verre selon l'une quelconque des revendications précédentes
- comme emballage primaire de produit pharmaceutique, en particulier comme bouteille, seringue, carpule ou ampoule,
- comme verre trempé chimiquement,
- comme substrat, strate supérieure ou couverture, en particulier pour des applications électrotechniques, pour des écrans TFT, PDP, OLED, ainsi que pour la photovoltaïque,
- comme verre pour tubes, en particulier pour des lampes, des lampes halogènes ou des tubes fluorescents ou pour des applications thermosolaires,
- comme verre de réflecteur, en particulier pour des lampes,
- comme verre d'architecture,
- comme verre stable aux changements de température, en particulier pour des parties de four, des parties de réfrigérateur ou des parties de cuisinière,
- comme verre mince ou ultra mince doté d'épaisseurs de 10 à 500 micromètres et d'une surface extrêmement lisse ou polie au feu pour de nombreuses applications spéciales, y compris des processus rouleau à rouleau.
